# EUROPEAN PATENT APPLICATION

(11) **EP 4 836 589 A1**
(43) Date of publication of application: **04.11.2026**
(21) Application number: 25210993.9
(22) Date of filing: 24.10.2025
(51) Int. Cl.: H05B 45/10, H05B 45/20, H05B 45/375, H05B 45/385

(54) **INTEGRATED CONTROLLER-BASED LED CONSTANT CURRENT POWER SUPPLY AND DIMMING SYSTEM**

(30) Priority: 30.04.2025 CN 202520867478 U
(71) Applicant: Zhuhai Shengchang Electronics Co., Ltd., Zhuhai City, Guangdong Province (CN)
(72) Inventor: LEI, Minggeng, Zhuhai City (CN); LI, Jiawei, Zhuhai City (CN)
(74) Representative: Patent 42

(57) **Abstract**

The present disclosure relates to an integrated controller-based LED constant current power supply, includes a housing and a circuit board; wherein the circuit board is disposed in the housing, and a control panel is disposed on a front surface of the housing. The control panel is electrically connected to the circuit board. The circuit board is provided with an input port, an output port, an Alternating Current to Direct Current (AC-DC) conversion circuit, a power supply circuit, a constant current Direct Current to Direct Current (DC-DC) dimming unit, a control unit, and a panel input control circuit. The input port is electrically connected to an input terminal of the AC-DC conversion circuit; an output terminal of the AC-DC conversion circuit is electrically connected to an input terminal of the constant current DC-DC dimming unit and an input terminal of the power supply circuit.

## Description

### TECHNICAL FIELD

The present disclosure relates to the technical field of Light-Emitting Diode (LED) power supplies, and specifically relates to an integrated controller-based LED constant current power supply and a dimming system.

### BACKGROUND

Over time, dimming methods for LED dimming power supplies have become increasingly diverse, and application topologies have tended to mature. The vast majority of conventional LED power supplies are independent, exist as actuating components, are controlled by dimmers, and are installed separately from the dimmers, resulting in difficult installation and wiring. Therefore, there is a need to design an LED power supply that can solve the above technical problems to improve the installation and user experience for end users.

### SUMMARY

To overcome the deficiencies of the prior art, an objective of the present disclosure is to provide an integrated controller-based LED constant current power supply, which integrates the power supply and the dimmer into one unit, thereby eliminating the need for separate grooving and wiring. The convenience of installation and use for end users is improved.

To solve the above problems, the technical solution adopted in the present disclosure is as follows: An integrated controller-based LED constant current power supply includes a housing and a circuit board, where the circuit board is disposed in the housing; a control panel is disposed on a front surface of the housing; the control panel is electrically connected to the circuit board; the circuit board is provided with an input port, an output port, an Alternating Current to Direct Current (AC-DC) conversion circuit, a power supply circuit, a constant current Direct Current to Direct Current (DC-DC) dimming unit, a control unit, and a panel input control circuit; the input port is electrically connected to an input terminal of the AC-DC conversion circuit; an output terminal of the AC-DC conversion circuit is electrically connected to an input terminal of the constant current DC-DC dimming unit and an input terminal of the power supply circuit, respectively; an output terminal of the constant current DC-DC dimming unit is electrically connected to the output port; the control panel is electrically connected to an input terminal of the panel input control circuit; an output terminal of the panel input control circuit is electrically connected to the control unit; the constant current DC-DC dimming unit is configured to adjust an output current under the control of the control unit to control brightness and/or color temperature of a lamp load; and the power supply circuit is configured to supply power to the control unit.

Compared with the prior art, the beneficial effects of the present disclosure are as follows: In this LED constant current power supply, by integrating the constant current power supply, the control unit, and the control panel together, a control signal can be input to the control unit via the control panel, and the control unit controls the constant current power supply to adjust its output current, thereby achieving adjustment of the brightness, color temperature, or color of an LED lamp. Because this LED constant current power supply integrates the functions of the power supply and the dimmer, it is not necessary to separately install the dimmer and the power supply during installation, nor is it necessary to perform grooving and wiring for the dimmer and the power supply separately, thereby reducing the installation difficulty of the dimming control system for the LED lamp and improving the installation and user experience for end users.

The aforementioned integrated controller-based LED constant current power supply further includes a parameter setting circuit, where the parameter setting circuit is electrically connected to the control unit, and the parameter setting circuit is configured to set control parameters of the control unit.

The aforementioned integrated controller-based LED constant current power supply further includes a PUSH dimming circuit, where an input terminal of the PUSH dimming circuit is configured to be connected to a PUSH button, an output terminal of the PUSH dimming circuit is electrically connected to the control unit, and the PUSH dimming circuit is configured to detect a state of the PUSH button.

The aforementioned integrated controller-based LED constant current power supply further includes a wireless dimming circuit, where the wireless dimming circuit is electrically connected to the control unit, and the wireless dimming circuit is configured for wireless communication between the control unit and an external terminal device.

In the aforementioned integrated controller-based LED constant current power supply, the control panel is provided with a switch control device, a brightness control device, and/or a color temperature control device; and the switch control device, the brightness control device, and the color temperature control device include at least one of a Dual In-line Package (DIP) switch, a potentiometer, a button, a touch screen, a rotary encoder, and a Near Field Communication (NFC) module.

In the aforementioned integrated controller-based LED constant current power supply, the AC-DC conversion circuit includes a rectifier-filter circuit and a flyback circuit, an input terminal of the rectifier-filter circuit is electrically connected to the input port, an output terminal of the rectifier-filter circuit is electrically connected to an input terminal of the flyback circuit, and an output terminal of the flyback circuit is electrically connected to the power supply circuit and the input terminal of the constant current DC-DC dimming unit.

In the aforementioned integrated controller-based LED constant current power supply, the constant current DC-DC dimming unit includes a controlled switch circuit and at least one buck converter module; a control power input terminal of each of the at least one buck converter module is electrically connected to the output terminal of the AC-DC conversion circuit via the controlled switch circuit; a power output terminal of each of the at least one buck converter module is electrically connected to the output terminal of the AC-DC conversion circuit; an output terminal of each of the at least one buck converter module is electrically connected to the output port; and the controlled switch circuit and the at least one buck converter module are controlled by the control unit.

In the aforementioned integrated controller-based LED constant current power supply, the parameter setting circuit includes at least one of a DIP switch and an NFC module.

In the aforementioned integrated controller-based LED constant current power supply, the PUSH dimming circuit includes a resistor, a diode, and a photoelectric coupler; where an anode of an input terminal of the photoelectric coupler is electrically connected to a cathode of a diode D6 via a resistor R40; an anode of the diode D6 is electrically connected to an L terminal of the PUSH button via a resistor R38; a cathode of the input terminal of the photoelectric coupler is electrically connected to an N terminal of the PUSH button; the cathode of the input terminal of the photoelectric coupler is further electrically connected to an anode of a diode D7; a cathode of the diode D7 is electrically connected to the anode of the input terminal of the photoelectric coupler; and an output terminal of the photoelectric coupler is electrically connected to the control unit.

A dimming system includes a PUSH button, a lamp load, and the integrated controller-based LED constant current power supply; where the input port of the LED constant current power supply is connected to a mains electricity supply; the output port of the LED constant current power supply is electrically connected to the lamp load; and the PUSH button is electrically connected to the input terminal of the PUSH dimming circuit of the LED constant current power supply.

The present disclosure will be described in further detail below with reference to the accompanying drawings and specific embodiments.

### BRIEF DESCRIPTION OF THE DRAWINGS

Fig. 1 is a schematic structural diagram of an LED constant current power supply according to a first embodiment of the present disclosure.
Fig. 2 is an exploded schematic diagram of the LED constant current power supply according to the first embodiment of the present disclosure.
Fig. 3 is a principle block diagram of a circuit board according to the first embodiment of the present disclosure.
Fig. 4 is a schematic diagram of an AC-DC conversion circuit according to the first embodiment of the present disclosure.
Fig. 5 is a schematic diagram of a constant current DC-DC dimming unit according to the first embodiment of the present disclosure.
Fig. 6 is a principle block diagram of a circuit board according to a second embodiment of the present disclosure.
Fig. 7 is an exploded schematic diagram of an LED constant current power supply according to a third embodiment of the present disclosure.
Fig. 8 is a principle block diagram of a circuit board according to the third embodiment of the present disclosure.
Fig. 9 is a schematic diagram of a PUSH dimming circuit according to the third embodiment of the present disclosure.
Fig. 10 is a principle diagram of a dimming system according to an embodiment of the present disclosure.

Reference Numeral Description:
100 housing, 200 circuit board, 300 control panel, 310 brightness control device, 320 switch control device, 330 color temperature control device.

### DETAILED DESCRIPTION OF THE EMBODIMENTS

The embodiments of the present disclosure are described in detail below.

### Embodiment 1:

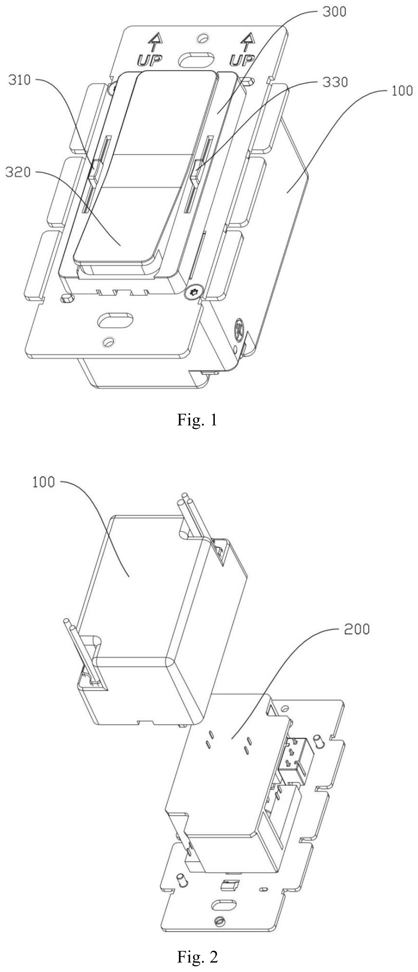

Referring to Figs. 1 to 3, a first embodiment of the present disclosure provides an integrated controller-based LED constant current power supply. The integrated controller-based LED constant current power supply includes a housing 100 and a circuit board 200, where a control panel 300 is disposed on a front surface of the housing 100; the circuit board 200 is disposed in the housing 100; the control panel 300 is electrically connected to the circuit board 200; the circuit board 200 is disposed on a back side of the control panel 300. The circuit board 200 is provided with an input port, an output port, an AC-DC conversion circuit, a power supply circuit, a constant current DC-DC dimming unit, a control unit, and a panel input control circuit. The input port is configured to be connected to a mains electricity supply; the output port is configured to be connected to an LED lamp load; wire passing holes configured to allow cables connected to the input port and the output port to pass through are disposed on a surface of the housing 100. An input terminal of the AC-DC conversion circuit is connected to the mains electricity supply via the input port; the AC-DC conversion circuit is configured to convert alternating current from the mains electricity supply into direct current; an output terminal of the AC-DC conversion circuit is electrically connected to an input terminal of the constant current DC-DC dimming unit and an input terminal of the power supply circuit. An output terminal of the constant current DC-DC dimming unit is electrically connected to the lamp load via the output port; the constant current DC-DC dimming unit is configured to adjust an output current value under the control of the control unit, thereby forming a constant current source with a controllable output, so as to achieve adjustment of the brightness, color temperature, and color of the lamp. An input terminal of the panel input control circuit is electrically connected to the control panel 300; the panel input control circuit is disposed on the circuit board on the back side of the control panel; an output terminal of the panel input control circuit is electrically connected to the control unit; the panel input control circuit is configured to convert operations on the control panel 300 into corresponding electrical signals and then transmit the electrical signals to the control unit. This LED constant current power supply integrates the constant current source and the dimmer together. Consequently, when arranging the dimming control lines for the lamp, it is only necessary to perform grooving and wiring for the installation of this LED constant current power supply. The difficulty of installation is reduced, facilitating use and installation by end users, and improving the user experience for end users.

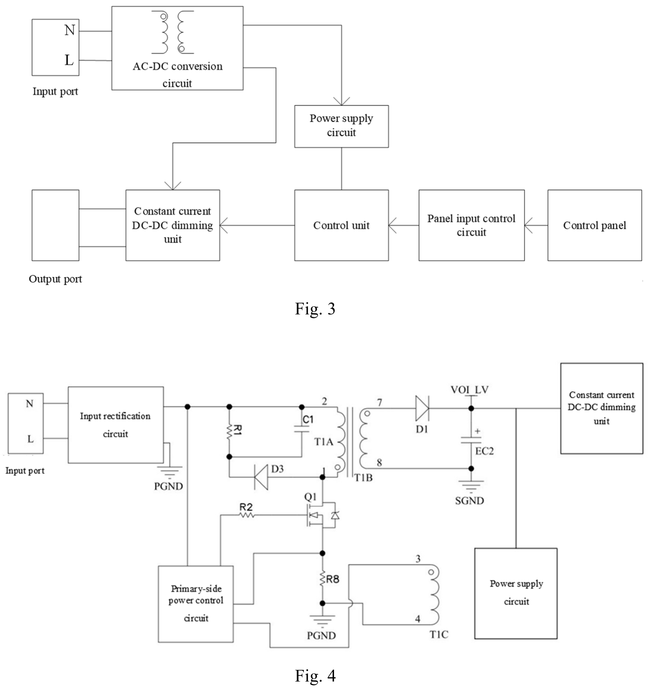

Referring to Fig. 4, in this embodiment, the AC-DC conversion circuit includes a rectifier-filter circuit and a flyback circuit. An input terminal of the rectifier-filter circuit is electrically connected to the input port, and an output terminal of the rectifier-filter circuit is electrically connected to an input terminal of the flyback circuit. The rectifier-filter circuit is configured to rectify and filter the mains electricity supply. An output terminal of the flyback circuit is electrically connected to the power supply circuit and the input terminal of the constant current DC-DC dimming unit. The flyback circuit is configured to step down the rectified mains electricity, convert the rectified mains electricity into a stable voltage, and provide insulation isolation between the input and the output.

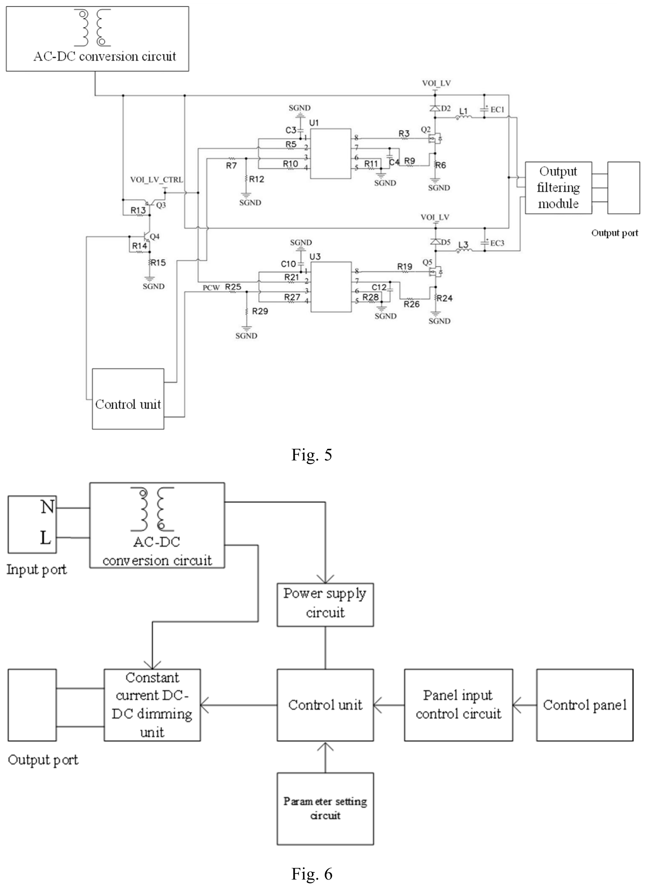

Referring to Fig. 5, in this embodiment, the constant current DC-DC dimming unit includes a controlled switch circuit, two buck converter modules, and peripheral circuits of the two buck converter modules. A control power input terminal of each of the two buck converter modules is electrically connected to the output terminal of the flyback circuit via the controlled switch circuit. A power output terminal of each of the two buck converter modules is electrically connected to the output terminal of the flyback circuit. An output terminal of each of the two buck converter modules is electrically connected to a respective different output terminal of the output port. The output terminals of the two buck converter modules are configured to be connected to cool-white LED beads and warm-white LED beads of the lamp load respectively, so as to achieve adjustment of the color temperature of the lamp by adjusting a ratio of cool-white light to warm-white light. Both the buck converter modules and the controlled switch circuit are controlled by the control unit. The controlled switch circuit is configured to control the connection and disconnection between the control power of the buck converter modules and the flyback circuit under the control of the control unit, so as to achieve switch control of the lamp. Each buck converter module is configured to adjust an output current under the control of the control unit, so as to achieve control of the power of the connected LED beads in the lamp load. In this embodiment, the controlled switch circuit consists of transistors Q3 and Q4, and a plurality of current-limiting resistors. The buck converter modules employ buck converter chips. In some embodiments, the constant current DC-DC dimming unit may further include three or more sets of buck converter modules. Output terminals of the plurality of sets of buck converter modules are electrically connected to LED beads of different colors in the lamp load respectively, so as to achieve color adjustment of the lamp.

The power supply circuit preferably employs a step-down circuit. In this embodiment, the power supply circuit employs a 3.3 V buck converter circuit, which steps down the direct current output from the flyback circuit to a stable 3.3 V voltage for operation of the control unit. In this embodiment, the control unit includes a single-chip microcomputer and peripheral circuits of the single-chip microcomputer.

It is understandable that control devices should be provided on the control panel 300 to allow a user to control the switching on/off of the lamp, and to adjust the brightness, color temperature, and color of the lamp. The control devices can be devices such as potentiometers, DIP switches, rotary encoders, buttons, touch screens, or even NFC modules. Referring to Fig. 1, in this embodiment, the control panel 300 is provided with a switch control device 320, a brightness control device 310, and a color temperature control device 330, configured to control the on/off state of the lamp, adjust the brightness of the lamp, and adjust the color temperature of the lamp, respectively. The switch control device 320 employs a rocker switch, and both the brightness control device 310 and the color temperature control device 330 employ sliding potentiometers. It is understandable that the specific structure of the panel input control circuit is determined by the control devices on the control panel 300. If the control device employs a rotary encoder, the panel input control circuit is a rotary encoder circuit; if the control device is a button, the panel input control circuit is a button circuit; if the control device is a touch screen, the panel input control circuit is a touch screen driver circuit.

### Embodiment 2:

Referring to Fig. 6, the structure of this embodiment is substantially the same as that of Embodiment 1, with the difference being that this embodiment further includes a parameter setting circuit. The parameter setting circuit is electrically connected to the control unit and is configured to set control parameters including, but not limited to, maximum output current, dimming curve, dimming Pulse Width Modulation (PWM) frequency, and temperature protection limit. The parameter setting circuit can include a DIP switch, an NFC module, or the like. The DIP switch can connect resistors of different resistance values into a certain pin of the control unit through different DIP combinations, thereby adjusting the voltage value fed back to the control unit via the resistance, so that the control unit determines the corresponding maximum output current according to the input voltage value. The NFC module can directly communicate with a mobile phone having NFC read/write functionality and write modified control parameters into the control unit through communication protocols such as Universal Asynchronous Receiver-Transmitter (UART), Inter-Integrated Circuit (IIC), or Serial Peripheral Interface (SPI).

### Embodiment 3:

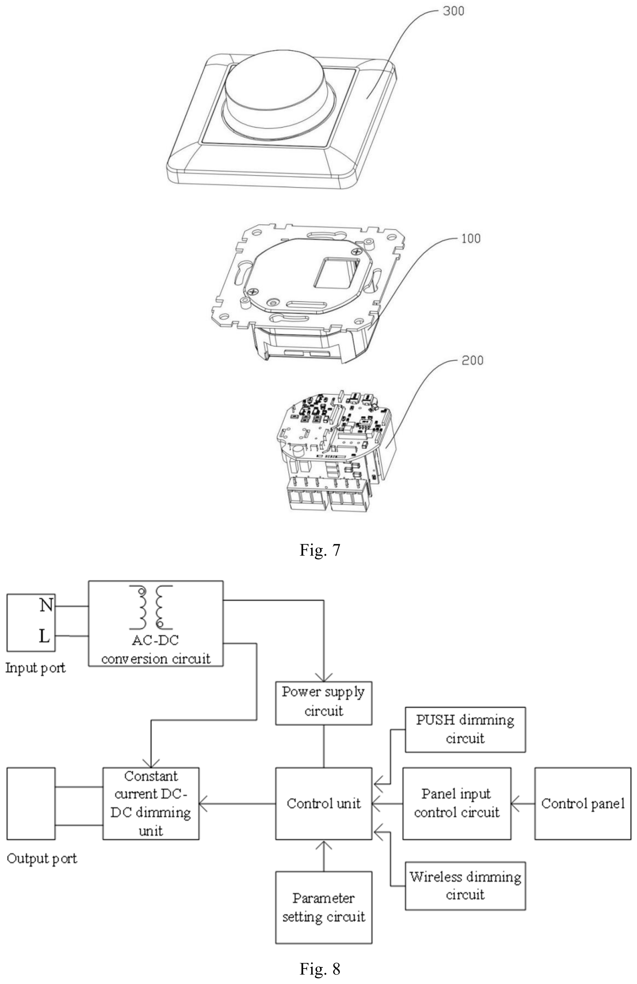

Referring to Figs. 7 and 8, the structure of this embodiment is substantially the same as that of Embodiment 2. The differences are that the input port and the output port are directly exposed on the outer surface of the housing 100 through avoidance notches on the surface of the housing 100; the control devices on the control panel 300 employ a pressable rotary encoder, which can be used to switch control items by the number of presses and the press duration, such as a short press to control the on/off state of the lamp, a long press to switch between adjusting color temperature or brightness, and rotating the handle of the rotary encoder to adjust the brightness value or the color temperature value. Additionally, this embodiment further includes a PUSH dimming circuit and a wireless dimming circuit. An input terminal of the PUSH dimming circuit is electrically connected to the input port and is electrically connected to a PUSH button via the input port; an output terminal of the PUSH dimming circuit is electrically connected to the control unit, thereby forming a dual-control dimming control system for the lamp together with the PUSH button. Different control adjustments for the lamp are achieved by detecting the press duration and press frequency of the PUSH button. The wireless dimming circuit is electrically connected to the control unit and is configured to communicate with external terminal devices, such as a mobile phone or a whole-house smart control terminal. Communication with the terminal devices can be achieved through methods including but not limited to Wireless Fidelity (WIFI), ZigBee, Bluetooth, Narrow Band Internet of Things (NB-IOT), or Long Range (Lora), thereby achieving wireless control of the lamp.

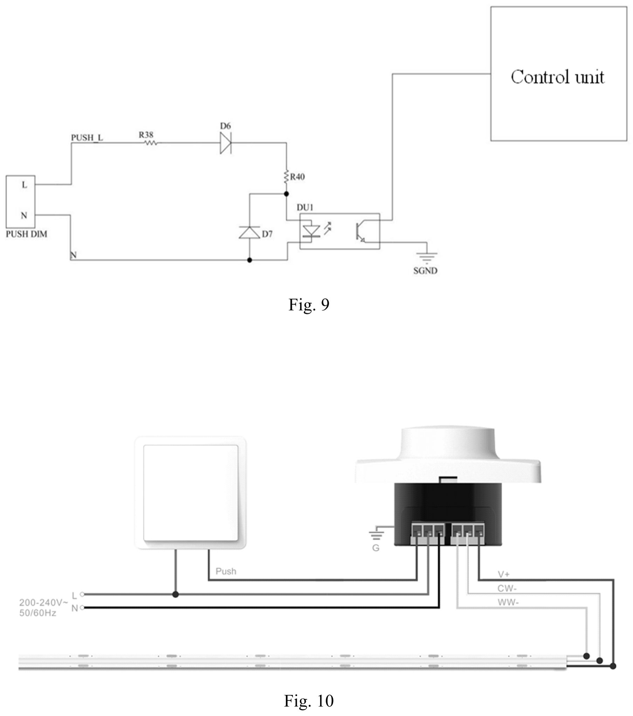

Referring to Fig. 9, because the PUSH button is typically connected in series within the control lines of the lamp and is directly connected to the mains electricity supply, the PUSH dimming circuit needs to detect the state of the PUSH button via a photoelectric coupler. In this embodiment, the PUSH dimming circuit includes resistors, diodes, and a photoelectric coupler. An anode of an input terminal of the photoelectric coupler DU1 is electrically connected to a cathode of a diode D6 via a resistor R40. An anode of the diode D6 is electrically connected to an L terminal of the PUSH button via a resistor R38. A cathode of the input terminal of the photoelectric coupler DU1 is electrically connected to an N terminal of the PUSH button. The cathode of the input terminal of the photoelectric coupler DU1 is also electrically connected to an anode of a diode D7. A cathode of the diode D7 is electrically connected to the anode of the input terminal of the photoelectric coupler DU1. An output terminal of the photoelectric coupler DU1 is electrically connected to the control unit. This PUSH button circuit detects the half-wave of the mains electricity input waveform through the two diodes. When the PUSH button is pressed, the photoelectric coupler DU1 conducts driven by the positive half-cycle of the sine wave. In some embodiments, the PUSH button circuit may also include a rectifier bridge stack or four or more diodes to achieve full-wave input detection.

Referring to Fig. 10, the dimming system according to the embodiment of the present disclosure includes the integrated controller-based LED constant current power supply of the aforementioned third embodiment, a PUSH button, and a lamp load. The L terminal of the PUSH button is connected to the live wire of the mains electricity. The N terminal of the PUSH button is connected to an input terminal of the input port of the LED constant current power supply, which is connected to the PUSH dimming circuit. The input terminals of the input port of the LED constant current power supply connected to the AC-DC conversion circuit are connected to the live wire and the neutral wire of the mains electricity supply, respectively. The output port of the LED constant current power supply is electrically connected to the lamp load. This dimming system enables dual control of the lamp load through the PUSH button and the control panel 300 on the LED constant current power supply, allowing control of the same lamp load from two different locations within a building. Furthermore, because the PUSH dimming circuit can detect the state of the PUSH button and convert the state into a level signal transmitted to the control unit, functions such as switching the lamp on/off and adjusting the brightness or color temperature can be achieved by detecting the press duration and press frequency of the PUSH button.

It should be noted that in the description of the present disclosure, any references to orientation or positional relationships, such as "upper," "lower," "front," "rear," "left," "right," etc., are based on the orientation or positional relationships shown in the accompanying drawings. These references are used solely for the purpose of facilitating the description of the present disclosure and simplifying the description, and do not indicate or imply that the described device or element must have a specific orientation or be constructed and operated in a specific orientation. Therefore, these references should not be construed as limiting the present disclosure.

In the description of the present disclosure, "a plurality of" shall refer to one or more, "multiple" shall refer to two or more, and expressions such as "greater than," "less than," "exceed," etc., shall be understood as excluding the stated number. Expressions such as "above," "below," "within," etc., shall be understood as including the stated number. If references to "first" or "second" are made, they are merely for the purpose of distinguishing technical features, and should not be understood to indicate or imply relative importance, or implicitly specify the number of technical features being referred to, or imply any order of precedence among the technical features.

In the description of the present disclosure, unless explicitly defined otherwise, terms such as "disposed," "mounted," and "connected" should be interpreted broadly. A person skilled in the relevant technical field can reasonably determine the specific meanings of these terms in the context of the present disclosure based on the specific content of the technical solution.

The aforementioned embodiments are merely preferred embodiments of the present disclosure and are not intended to limit the scope of protection of the present disclosure. Any non-substantial changes and substitutions made by a person skilled in the art on the basis of the present disclosure fall within the scope of protection sought by the present disclosure.

## Claims

1. An integrated controller-based Light-Emitting Diode (LED) constant current power supply, comprising a housing (100) and a circuit board (200), wherein the circuit board (200) is disposed in the housing (100); a control panel (300) is disposed on a front surface of the housing (100); the control panel (300) is electrically connected to the circuit board (200); the circuit board (200) is provided with an input port, an output port, an Alternating Current to Direct Current (AC-DC) conversion circuit, a power supply circuit, a constant current Direct Current to Direct Current (DC-DC) dimming unit, a control unit, and a panel input control circuit; the input port is electrically connected to an input terminal of the AC-DC conversion circuit; an output terminal of the AC-DC conversion circuit is electrically connected to an input terminal of the constant current DC-DC dimming unit and an input terminal of the power supply circuit, respectively; an output terminal of the constant current DC-DC dimming unit is electrically connected to the output port; the control panel (300) is electrically connected to an input terminal of the panel input control circuit; an output terminal of the panel input control circuit is electrically connected to the control unit; the constant current DC-DC dimming unit is configured to adjust an output current under the control of the control unit to control brightness and/or color temperature of a lamp load; and the power supply circuit is configured to supply power to the control unit.

2. The integrated controller-based LED constant current power supply according to claim 1, further comprising a parameter setting circuit, wherein the parameter setting circuit is electrically connected to the control unit, and the parameter setting circuit is configured to set control parameters of the control unit.

3. The integrated controller-based LED constant current power supply according to claim 1, further comprising a PUSH dimming circuit, wherein an input terminal of the PUSH dimming circuit is configured to be connected to a PUSH button, an output terminal of the PUSH dimming circuit is electrically connected to the control unit, and the PUSH dimming circuit is configured to detect a state of the PUSH button.

4. The integrated controller-based LED constant current power supply according to claim 1, further comprising a wireless dimming circuit, wherein the wireless dimming circuit is electrically connected to the control unit, and the wireless dimming circuit is configured for wireless communication between the control unit and an external terminal device.

5. The integrated controller-based LED constant current power supply according to claim 1, wherein the control panel (300) is provided with a switch control device (320), a brightness control device (310), and/or a color temperature control device (330); and the switch control device (320), the brightness control device (310), and the color temperature control device (330) comprise at least one of a Dual In-line Package (DIP) switch, a potentiometer, a button, a touch screen, a rotary encoder, and a Near Field Communication (NFC) module.

6. The integrated controller-based LED constant current power supply according to claim 1, wherein the AC-DC conversion circuit comprises a rectifier-filter circuit and a flyback circuit, an input terminal of the rectifier-filter circuit is electrically connected to the input port, an output terminal of the rectifier-filter circuit is electrically connected to an input terminal of the flyback circuit, and an output terminal of the flyback circuit is electrically connected to the power supply circuit and the input terminal of the constant current DC-DC dimming unit.

7. The integrated controller-based LED constant current power supply according to claim 1, wherein the constant current DC-DC dimming unit comprises a controlled switch circuit and at least one buck converter module; a control power input terminal of each of the at least one buck converter module is electrically connected to the output terminal of the AC-DC conversion circuit via the controlled switch circuit; a power output terminal of each of the at least one buck converter module is electrically connected to the output terminal of the AC-DC conversion circuit; an output terminal of each of the at least one buck converter module is electrically connected to the output port; and the controlled switch circuit and the at least one buck converter module are controlled by the control unit.

8. The integrated controller-based LED constant current power supply according to claim 2, wherein the parameter setting circuit comprises at least one of a DIP switch and an NFC module.

9. The integrated controller-based LED constant current power supply according to claim 3, wherein the PUSH dimming circuit comprises a resistor, a diode, and a photoelectric coupler; wherein an anode of an input terminal of the photoelectric coupler is electrically connected to a cathode of a diode D6 via a resistor R40; an anode of the diode D6 is electrically connected to an L terminal of the PUSH button via a resistor R38; a cathode of the input terminal of the photoelectric coupler is electrically connected to an N terminal of the PUSH button; the cathode of the input terminal of the photoelectric coupler is further electrically connected to an anode of a diode D7; a cathode of the diode D7 is electrically connected to the anode of the input terminal of the photoelectric coupler; and an output terminal of the photoelectric coupler is electrically connected to the control unit.

10. A dimming system, comprising a PUSH button, a lamp load, and the integrated controller-based LED constant current power supply according to claim 3; wherein the input port of the LED constant current power supply is connected to a mains electricity supply; the output port of the LED constant current power supply is electrically connected to the lamp load; and the PUSH button is electrically connected to the input terminal of the PUSH dimming circuit of the LED constant current power supply.
